(19) Europäisches Patentamt
European Patent Office
Office européen des brevets

(11) **EP 3 600 983 B1**

(12) **EUROPÄISCHE PATENTSCHRIFT**

(45) Veröffentlichungstag und Bekanntmachung des Hinweises auf die Patenterteilung:
**09.06.2021  Patentblatt 2021/23**

(51) Int Cl.:
***B60T 7/22*** *(2006.01)*   ***B60T 13/66*** *(2006.01)*
***G05B 11/42*** *(2006.01)*

(21) Anmeldenummer: **18714989.3**

(22) Anmeldetag: **19.03.2018**

(86) Internationale Anmeldenummer:
**PCT/EP2018/056836**

(87) Internationale Veröffentlichungsnummer:
**WO 2018/177786 (04.10.2018 Gazette 2018/40)**

(54) **VERFAHREN ZUM BETREIBEN EINER STEUERVORRICHTUNG FÜR EINE BREMSANLAGE EINES KRAFTFAHRZEUGS SOWIE STEUERVORRICHTUNG UND KRAFTFAHRZEUG**

METHOD FOR OPERATING A CONTROL DEVICE FOR A BRAKE SYSTEM OF A MOTOR VEHICLE, CONTROL DEVICE AND MOTOR VEHICLE

PROCEDE DE FONCTIONNEMENT D'UN DISPOSITIF DE COMMANDE D'UN SYSTEME DE FREINAGE D'UN VEHICULE AUTOMOBILE, DISPOSITIF DE COMMANDE ET VEHICULE AUTOMOBILE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.03.2017  DE 102017205206**

(43) Veröffentlichungstag der Anmeldung:
**05.02.2020  Patentblatt 2020/06**

(73) Patentinhaber: **Volkswagen Aktiengesellschaft 38440 Wolfsburg (DE)**

(72) Erfinder: **BUSSE, Oliver 38442 Wolfsburg (DE)**

(56) Entgegenhaltungen:
WO-A2-92/05986       DE-A1- 4 100 064
DE-A1- 10 021 135     DE-A1- 19 616 732
DE-A1-102005 005 375  DE-A1-102009 030 165
DE-A1-102015 218 166  DE-A1-102016 111 065
JP-A- 2005 092 267    US-A1- 2009 048 751

**Beschreibung**

Die Erfindung betrifft ein Verfahren, um mittels einer Steuervorrichtung eine Bremsanlage eines Kraftfahrzeugs zu steuern. Durch das Verfahren werden Bremsen des Kraftfahrzeugs in Abhängigkeit von einer Bremsanforderung eines Fahrerassistenzsystems betätigt oder aktiviert. Zu der Erfindung gehören auch die Steuervorrichtung sowie ein Kraftfahrzeug mit der erfindungsgemäßen Steuervorrichtung.

In einem Kraftfahrzeug kann ein Fahrerassistenzsystem den Fahrer von der sogenannten Fahraufgabe entlasten, also beispielsweise die Längsführung (Beschleunigen und Abbremsen) und/oder Querführung (Lenken) ohne ein Zutun des Fahrers durchführen. Ein Beispiel für ein solches Fahrerassistenzsystem ist die Abstands- und Geschwindigkeitsregelung (ACC - Adaptive Cruise Control, Abstandsregelautomat). Ein weiteres Beispiel für ein Fahrerassistenzsystem mit Anforderungen an die Längsregelung ist ein Parkassistent. Ein Fahrerassistenzsystem greift dabei nicht selbst auf die Bremsanlage zu, um eine benötigte negative Beschleunigung (Abbremsen) umzusetzen oder zu steuern.

Für das Umsetzen einer Bremsanforderung (d.h. der negativen Beschleunigung zum Abbremsen) ist stattdessen ein kaskadierter Aufbau von Reglern vorgesehen, indem der kinematische Regler des Fahrerassistenzsystems (äußere Kaskade) seine Bremsanforderung betreffend die Fahrzeugbewegung an einen oder zwei dynamische Regler (innere Kaskade) ausgibt oder aussendet, die dann die vorgegebene Soll-Beschleunigung, das heißt den angeforderten Beschleunigungswert der Bremsanforderung, in einen entsprechenden Wert für beispielsweise ein Bremsmoment oder eine Bremskraft oder einen Bremsdruck umrechnet und auf Grundlage dieses Werts dann die eigentliche Bremsanlage regelt. Die hier beschriebenen Größen Bremsmoment, Bremskraft und Bremsdruck sind äquivalent zueinander nutzbar, weshalb sie im weiteren zusammenfassend als Betriebsgröße des Bremsvorgangs oder kurz Bremsbetriebsgröße bezeichnet sind.

Der dynamische Regler der inneren Kaskade beaufschlagt somit die ihm zur Verfügung stehenden Aktuatoren mit der aus dem Fahrerassistenzsystem empfangenen Bremsanforderung, wobei hierzu eben die Umrechnung von der Bremsanforderung in den Anforderungswert für die Bremsbetriebsgröße, also z.B. das Bremsmoment, erfolgt. Als Aktuator steht hier eine Bremsdruckpumpe der Bremsanlage des Kraftfahrzeugs zur Verfügung. Der dynamische Regler steuert diese Bremsdruckpumpe wiederum indirekt durch Vorgeben eines Sollwerts oder Anforderungswerts für einen Regler der Bremsdruckpumpe.

Durch diese kaskadierte Regelung oder Regelkette ergibt sich somit folgender Ablauf zum Einstellen einer Bremsbetriebsgröße in einer Bremsanlage in Abhängigkeit von einer Bremsanforderung des Fahrerassistenzsystems: Zwischen Fahrerassistenzsystem und Bremsanlage befindet sich der dynamische Regler. Ein solcher dynamischer Regler kann durch eine Reglereinrichtung einer Steuervorrichtung des Kraftfahrzeugs bereitgestellt werden. Das erfindungsgemäße Verfahren bezieht sich auf diese Steuervorrichtung. Die Steuervorrichtung empfängt aus dem Fahrerassistenzsystem, beispielsweise einem Abstandsregelautomaten, die Bremsanforderung, d.h. einen Beschleunigungswert, wie beispielsweise -1 m/s$^2$. Zu dieser Bremsanforderung wird dann ein stationärer Zielwert einer Bremsbetriebsgröße der Bremsanlage ermittelt, also beispielsweise des Bremsmoments. Der Zielwert gibt denjenigen Wert der Bremsbetriebsgröße an, der zu der angeforderten Bremsbeschleunigung führt.

Der Zielwert kann aber nicht sofort eingestellt werden, da dies zu einer ruckartigen Änderung der Bremsbetriebsgröße führen würde, also beispielsweise zu einem ruckartigen oder stufenförmigen Anstieg des Bremsmoments auf z.B. -1 m/s$^2$. Dies soll für Fahrzeuginsassen verhindert oder vermieden werden, da diese Änderung nämlich auch einen stufenförmigen Anstieg der Beschleunigung des Kraftfahrzeugs (hier der negativen Beschleunigung) bewirken würde. Man ist stattdessen an einem graduellen Anstieg oder einer graduellen Veränderung der Beschleunigung des Kraftfahrzeugs interessiert. Die Ableitung der Beschleunigung wird als Ruck bezeichnet. Dieser Ruck soll also im mathematischen Sinne stetig differenzierbar verlaufen. Bevorzugt ist man an einem konstanten Wert des Rucks interessiert. Mit anderen Worten soll der Ruck allgemein eine vorgegebene Randbedingung erfüllten, die hier als Ruckkriterium bezeichnet ist. Der Zielwert ist also derjenige Wert, der innerhalb einer vorbestimmten Zeitdauer graduell eingestellt werden soll, z.B. innerhalb von zwei Sekunden oder allgemein einem anderem Wert kleiner als z.B. fünf Sekunden.

Erhält nun die Steuervorrichtung aus dem Fahrerassistenzsystem die Bremsanforderung mit dem negativen Beschleunigungswert, so gilt also zusätzlich dieses Ruckkriterium. Also muss sich beispielsweise eine Veränderung der Bremsbetriebsgröße in der Weise ergeben, dass die Beschleunigung des Kraftfahrzeugs sich z.B. konstant ändert. Zum Erreichen des Zielwerts wird deshalb zunächst ein zeitlicher Idealverlauf ermittelt, der graduell unter Einhaltung der Ruckbedingung zu dem Zielwert führt. Der Idealverlauf kann beispielsweise bei einem Anfangswert von 0 beginnen, da die Bremse zu Beginn bei Empfangen der Bremsanforderung ja nicht aktiv ist. Die Reglereinheit stellt nun mittels ihres dynamischen Reglers einen Sollwert für den nachgeordneten Regler der Bremsdruckpumpe der Bremsanlage ein, und zwar eben nicht direkt den Zielwert der Bremsbetriebsgröße, sondern einen veränderlichen Sollwert, der hier als Anforderungswert bezeichnet ist und der sich idealerweise mit der Zeit gemäß dem Idealverlauf verändert, also sich graduell bis zum Zielwert steigert und dabei das Ruckkriterium erfüllt. Mittels des Anforderungswerts wird also der Bremsdruckpumpe signalisiert, welchen Bremsdruck die Bremsanlage zum Erzeugen oder Einstellen der Bremsbetriebsgröße einstellen oder erzeugen soll.

Allerdings wird der Anforderungswert nicht exakt gemäß dem Idealverlauf eingestellt. Es wird nämlich ein Regelfehler eines Istwerts der Bremsbetriebsgröße, also beispielsweise des Bremsmoments, bezüglich des Idealverlaufs ermittelt und dann durch den dynamischen Regler in Abhängigkeit von dem Regelfehler der Anforderungswert angepasst und erst dieser angepasste Anforderungswert bei dem Regler der Bremsdruckpumpe der Bremsanlage eingestellt.

Das Vorgeben oder Einregeln der Bremsbetriebsgröße in dieser Weise mittels des dynamischen Reglers und des nachgeordneten Reglers der Bremsdruckpumpe kann dahingehend ein Problem darstellen, als dass die Bremsanlage eine vom aktuellen Bremsdruck abhängige Dynamik aufweisen kann, sodass der zeitliche Gradient, der durch die Bremsanlage beim Einstellen der Bremsbetriebsgröße höchstens erreicht werden kann, variieren kann. Dieser Gradient kann insbesondere kleiner sein als eine Dynamik des dynamischen Reglers selbst. Hierdurch baut der dynamische Regler einen Regelfehler auf, der mit der Zeit immer weiter anwächst oder größer wird, weil die Bremsanlage mit ihrer geringeren Dynamik den Regelfehler nicht schnell genug reduzieren kann. Dieses Anwachsen des Regelfehlers ohne die Möglichkeit der Bremsanlage, durch Einstellen eines ausreichenden zeitlichen Gradienten den Regelfehler zu vermindern oder abzubauen, wird als WindUp bezeichnet.

Zur Verhinderung eines solchen WindUp ist aus der DE 196 16 732 A1 bzw. der DE 196 16 732 B4 bekannt, dass bei einem Verzögerungsregler dessen Integralanteil nur dann angepasst wird, falls ein einzuregelnder Istwert einen Sollwert fast erreicht hat. Ist dagegen der Istwert noch weit vom Sollwert entfernt, wird der Integralanteil nicht angepasst, sondern zu 0 gesetzt. Die Berücksichtigung ausschließlich einer Differenz zwischen Istwert und Sollwert weist den Nachteil auf, dass ein Potenzial der Bremsanlage, d.h. der höchstens erreichbare zeitliche Gradienten, der durch die Bremsdruckpumpe der Bremsanlage eingestellt werden kann, unter Umständen nicht genutzt wird. So kann es nämlich sinnvoll sein, auch bei großer Differenz den Integralanteil zu nutzen oder anzupassen, falls die Bremsanlage im aktuellen Betriebspunkt eine ausreichende Dynamik aufweist, um den Regelfehler ausgleichen zu können.

Weitere Ansätze zur Korrektur eines solchen WindUp sind aus der DE 10 2009 030 165 A1 und der DE 10 2005 005 375 A1 bekannt.

Der Erfindung liegt die Aufgabe zugrunde, bei der beschriebenen Regelkette ein WindUp zu vermeiden und gleichzeitig die größtmögliche Systemdynamik auszunutzen.

Die Aufgabe wird durch die Gegenstände der unabhängigen Patentansprüche gelöst. Vorteilhafte Weiterbildungen der Erfindung sind durch die abhängigen Patentansprüche, die folgende Beschreibung sowie die Figuren beschrieben.

Das beschriebene Verfahren zum Betreiben der Steuervorrichtung für die Bremsanlage sieht nun vor, einen vom aktuellen Betriebspunkt abhängigen zeitlichen Gradienten der Bremsbetriebsgröße, also beispielsweise des Bremsmoments, zu ermitteln, wie er durch die Bremsdruckpumpe maximal oder höchstens erreichbar ist. Entsprechend ergibt sich für den Abbremsfall oder Verzögerungsfall im Kraftfahrzeug eine Bremskraft, ein Bremsmoment oder ein Bremsdruck oder eine äquivalente Anforderung, die mindestens in erster Näherung proportional zum Bremsmoment ist. Allgemein ist hier von der besagten Bremsbetriebsgröße die Rede.

Es ist also während des Ansteuerns des Zielwerts der Bremsbetriebsgröße in der Steuervorrichtung bekannt, welche zeitliche Veränderung der Bremsbetriebsgröße aktuell oder momentan mittels der Bremsdruckpumpe maximal oder höchstens erreicht werden kann. Die Begrenzung der Bremsdruckpumpe kann beispielsweise darin begründet liegen, dass eine Drehzahl der Bremsdruckpumpe begrenzt ist, um eine Geräuschentwicklung unter einem Schwellenwert zu halten. So ist aus der DE 10 2009 008 941 A1 bekannt, zur Vermeidung von Geräuschen eine Druckmodulation in einer Bremsanlage auf eine Dynamik zu begrenzen, die kleiner als eine maximal mögliche Dynamik ist.

Die Steuervorrichtung überprüft nun, ob der Gradient ein vorbestimmtes Einfrierkriterium erfüllt. Mit Einfrierkriterium ist hierbei gemeint, dass eine Veränderung einer Betriebsgröße der Reglereinheit (z.B. der besagte Integralanteil) verhindert oder unterbrochen oder deaktiviert wird, also der aktuelle Wert dieser Regelbetriebsgröße eingefroren oder festgehalten oder zumindest begrenzt wird. Bei erfülltem Einfrierkriterium wird also zumindest eine Regelbetriebsgröße der Reglereinheit auf einen jeweils vorgegebenen Maximalwert begrenzt. Das Einfrieren sorgt also nicht dafür, dass der Wert der Regelbetriebsgröße konstant bleibt, sondern nur nicht über den Maximalwert hinaus größer werden kann. Die Regelbetriebsgröße kann dagegen kleiner werden, sodass die Reglereinheit beispielsweise auf einen zusätzlichen, äußeren Bremseffekt, wie beispielsweise das Hinaufrollen an einer Anhöhe, berücksichtigen kann. Der Maximalwert ist bevorzugt größer als Null, um eine Veränderung der Bremsbetriebsgröße sicherzustellen. Bei erfülltem Einfrierkriterium kann zusätzlich oder alternativ auch ein Gradient der Bremsanforderung selbst, also die Eingangsgröße, begrenzt werden.

Durch die Erfindung ergibt sich der Vorteil, dass die Steuervorrichtung ihre Reglereinheit konfiguriert oder einstellt und zwar in Abhängigkeit von dem aktuellen Vermögen oder Potenzial der Bremsdruckpumpe in Bezug auf den maximal erreichbaren zeitlichen Gradienten der Bremsbetriebsgröße im aktuellen Betriebspunkt, der beispielsweise durch einen aktuell bereits aufgebauten Druck definiert sein kann.

Zu der Erfindung gehören auch optionale Weiterbildungen, durch deren Merkmale sich zusätzliche Vorteile ergeben.

Die Reglereinheit kann einen PI-Regler als dynamischen Regler aufweisen . Allgemein ist vorgesehen, dass die Reglereinheit einen Regler mit einem I-Anteil (Integralanteil) aufweist und die von dem Einfrierkriterium betroffene oder gesteuerte Regelbetriebsgröße dieser I-Anteil ist. Es wird also der I-Anteil begrenzt. Hierdurch ergibt sich der Vorteil, dass der I-Anteil kleiner als der Maximalwert gehalten wird, der bevorzugt aber größer als Null ist, was noch weiter erläutert wird.

Durch Begrenzen des I-Anteils ergibt sich der Vorteil, dass die Trägheit oder der die Dynamik des Reglers begrenzende Anteil kleiner als der Maximalwert gehalten wird, sodass die Reglereinheit bei Erreichen des Anforderungswerts oder bei einem Überschwingen aufgrund des begrenzten I-Anteils innerhalb einer vorgebbaren Höchstzeitdauer korrigieren kann.

Solange das Einfrierkriterium unerfüllt oder verletzt ist, also die Dynamik der Bremsdruckpumpe ausreichend groß ist, wird bevorzugt die zumindest eine Regelbetriebsgröße, also insbesondere der I-Anteil, als Funktion des Regelfehlers auch größer als der auf das Einfrierkriterium bezogene Maximalwert eingestellt. Hierdurch ergibt sich der Vorteil, dass der Regelfehler mit dem zur Verfügung stehenden Potenzial, d.h. dem betragsmäßig maximal erreichbaren zeitlichen Gradienten der Bremsbetriebsgröße, reduziert werden kann.

Ein wichtiger Aspekt ist nun, welches Einfrierkriterium man wählt. Bevorzugt umfasst das Einfrierkriterium, dass der mittels der Bremsdruckpumpe maximal erreichbare zeitliche Gradient kleiner als ein Gradient des Idealverlaufs ist. Solange also der Idealverlauf sich steiler oder mit einem größeren Gradienten über der Zeit verändert als die Bremsdruckpumpe den Istwert der Bremsbetriebsgröße nachführen kann, ist das Einfrierkriterium erfüllt.

Wie bereits ausgeführt, ist der Maximalwert bevorzugt größer als Null, sodass also auch über die Regelbetriebsgröße, also beispielsweise den I-Anteil, ein Regelfehler gespeichert oder ermittelt werden kann, indem der I-Anteil größer als Null ist. Dies sorgt dafür, dass der Anforderungswert nicht Null wird und damit auch der Regler der Bremsdruckpumpe selbst einen entsprechend großen Regelfehler erzeugen oder ermitteln kann und somit die Bremsdruckpumpe mit einer maximal zulässigen oder maximal möglichen Drehzahl zu betreibt. Die maximal mögliche Drehzahl bezeichnet hierbei auch die in der beschriebenen Weise begrenzte Drehzahl.

Um nun auch die Regelbetriebsgröße, also insbesondere den I-Anteil, auf den Wert größer als Null einzustellen, ist bevorzugt vorgesehen, dass für den Fall, dass ein erfülltes Einfrierkriterium erkannt wird, die Regelbetriebsgröße nicht sofort eingefroren oder begrenzt wird, sondern erst nach einer vorbestimmten Wartezeit. Somit kann also auch der Wert der Regelbetriebsgröße bei Vorliegen eines Regelfehlers zunächst anwachsen oder größer werden.

Bisher wurde als Bremsbetriebsgröße das Bremsmoment genannt. Alternativ dazu kann als Bremsbetriebsgröße ein Bremsdruck, wie er durch die Bremsdruckpumpe erzeugt oder eingestellt werden kann, oder eine Bremskraft vorgesehen sein. Die Überführung unterschiedlicher Bremsbetriebsgrößen ineinander geht auf die Grundgleichung der Mechanik zurück: $F = m \cdot a$ (Kraft = Masse mal Beschleunigung).

Um nun den aktuellen höchstens erreichbaren zeitlichen Gradienten der Bremsbetriebsgröße zu ermitteln, sieht eine Weiterbildung vor, dass eine ab dem Empfangen der Bremsanforderung vergangene Zeitdauer ermittelt wird und ein zum jeweiligen aktuellen Zeitpunkt aktueller Wert des zeitlichen Gradienten in Abhängigkeit von einem Wert der Zeitdauer und auf der Grundlage eines Modells der Bremsanlage ermittelt wird. Mit anderen Worten wird eine zeitliche Veränderung oder ein zeitlicher Anstieg des Gradienten durch eine Funktion oder allgemein ein Modell als Funktion der Zeitdauer beschrieben. Hierdurch ergibt sich der Vorteil, dass ein sensorfreies Ermitteln des erreichbaren oder darstellbaren Gradienten ermöglicht ist.

Das Modell ist insbesondere in der Weise ausgelegt oder eingerichtet, dass ein Funktionszusammenhang oder ein funktionaler Zusammenhang von gefördertem Bremsflüssigkeitsvolumen und hierdurch bewirktem Bremsdruck auf der Grundlage eines Polynoms zweiter Ordnung angenähert wird. Hierdurch ergibt sich eine mit geringem Berechnungsaufwand durchführbare Berechnungsvorschrift für den zeitlichen Gradienten. Somit kann auch mittels eines Mikrocontrollers, der eine einfache Berechnungseinheit aufweisen kann, der zeitliche Gradient berechnet werden. Alternativ zur Verwendung eines Modells kann auch das Messen des Bremsdrucks vorgesehen sein. Das geförderte Bremsvolumen kann als Funktion der Zeitdauer und einer Drehzahl der Bremsdruckpumpe berechnet werden.

Wie bereits ausgeführt, wird der Idealverlauf vorgegeben, um die Bremsbetriebsgröße von einem Anfangswert auf den Zielwert zu führen. Der Anfangswert bei Aktivierung der Regelung ist insbesondere 0, d.h. es kann davon ausgegangen werden, dass die Bremszylinder der Bremsanlage druckfrei sind. Um vom Anfangswert zum Zielwert zu führen, wird darauf geachtet, dass durch den Idealverlauf die Ruckbedingung erfüllt ist. Diese Ruckbedingung umfasst insbesondere, dass ein in dem Kraftfahrzeug bewirkte Ruck, d.h. die zeitliche Ableitung der tatsächlich bewirkten Beschleunigung des Kraftfahrzeugs, kleiner als ein vorbestimmter Höchstwert ist. Mit anderen Worten ist also der Ruck begrenzt auf den Höchstwert. Die Ruckbedingung umfasst insbesondere auch oder alternativ, dass der Ruck konstant ist. Mit anderen Worten wird bei konstantem Ruck bis zum Erreichen des Zielwerts hoch geregelt. Bei Erreichen des Zielwerts ist die Bremsanforderung gegeben oder erfüllt, d.h. das Kraftfahrzeug wird mit dem angeforderten Beschleunigungswert abgebremst, also z.B. mit $-1\ m/s^2$. Der zeitliche Idealverlauf kann auch in Form eines zulässigen Gradienten vom Anforderer angefordert werden, d.h. von dem Fahrerassistenzsystem, und somit Teil des Anforderungssignals der Bremsanforderung sein (Zielwert + Gradient).

Durch Betreiben der Steuervorrichtung kann beispielsweise eine Bremsanforderung eines Abstandsregelautomat erfüllt werden. Mit anderen Worten wird die besagte Bremsanforderung in dieser Ausgestaltung also aus einem Abstandsregelautomat empfangen. Zusätzlich oder alternativ zu einem Abstandsregelautomat kann eine Bremsanforderung jeweils auch aus einer Parkassistenz und/oder einer bremsenden Geschwindigkeitsregelanlage (ohne Abstandsregelung) und/oder einem bremsenden Geschwindigkeitsbegrenzer (Speed Limiter) empfangen werden.

Zu der Erfindung gehört auch die besagte Steuervorrichtung für eine Bremsanlage eines Kraftfahrzeugs. Die Steuervorrichtung weist eine Prozessoreinrichtung auf, die dazu eingerichtet ist, eine Ausführungsform des erfindungsgemäßen Verfahrens durchzuführen. Die Prozessoreinrichtung kann hierzu beispielsweise zumindest einen Mikrocontroller und/oder zumindest einen Prozessor Mikroprozessor aufweisen. Zum Durchführen des Verfahrens kann ein Programmcode bereitgestellt sein, der bei Ausführen durch die Prozessoreinrichtung das Verfahren umsetzt oder durchführt.

Zu der Erfindung gehört auch ein Kraftfahrzeug mit einem Fahrerassistenzsystem und einer Bremsanlage. Die Bremsanlage kann beispielsweise Scheibenbremsen umfassen. Das Fahrerassistenzsystem und die Bremsanlage sind bei dem erfindungsgemäßen Kraftfahrzeug über eine Ausführungsform der erfindungsgemäßen Steuervorrichtung gekoppelt.

Im Folgenden ist ein Ausführungsbeispiel der Erfindung beschrieben. Hierzu zeigt:

Fig. 1    eine schematische Darstellung einer Ausführungsform des erfindungsgemäßen Kraftfahrzeugs;

Fig. 2    ein Diagramm mit schematisierten Verläufen von Signalen, wie sie sich bei einem Betrieb des Kraftfahrzeugs von Fig. 1 auf der Grundlage einer Ausführungsform des erfindungsgemäßen Verfahrens mit der Zeit t ergeben können; und

Fig. 3    ein Diagramm mit einem schematisierten Verlauf einer Abhängigkeit von Bremsdruck und gefördertem Bremsflüssigkeitsvolumen der Bremsanlage.

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

In den Figuren sind funktionsgleiche Elemente jeweils mit denselben Bezugszeichen versehen.

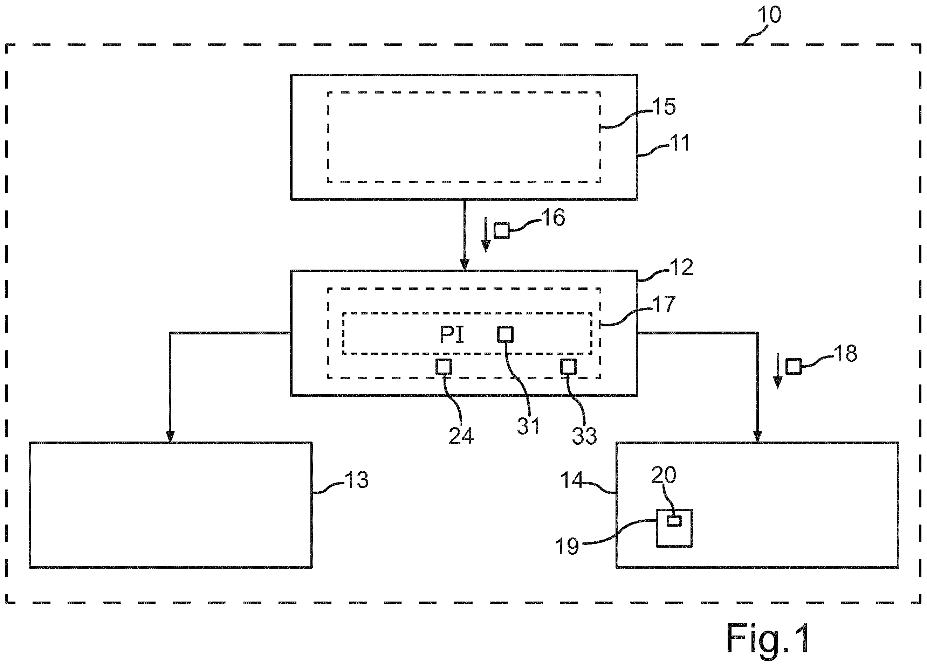

Fig. 1 zeigt ein Kraftfahrzeug 10, bei dem es sich beispielsweise um einen Kraftwagen, insbesondere einen Personenkraftwagen oder Lastkraftwagen, handeln kann. Dargestellt sind ein Fahrerassistenzsystem 11, eine Steuervorrichtung 12, ein Fahrantrieb 13 und eine Bremsanlage 14.

Das Fahrerassistenzsystem 11 kann beispielsweise ein Abstandsregelautomat sein. Zum Einstellen einer Fahrgeschwindigkeit z.B. für eine Abstandsregelung kann das Fahrerassistenzsystem 11 einen kinematischen Regler 15 aufweisen, also einen Regler zum Regeln einer Fahrgeschwindigkeit oder Rollgeschwindigkeit. Das Fahrerassistenzsystem 11 kann zum Einregeln einer Fahrgeschwindigkeit mittels des Reglers 15 eine Bremsanforderung 16 an die Steuervorrichtung 12 ausgeben oder aussenden.

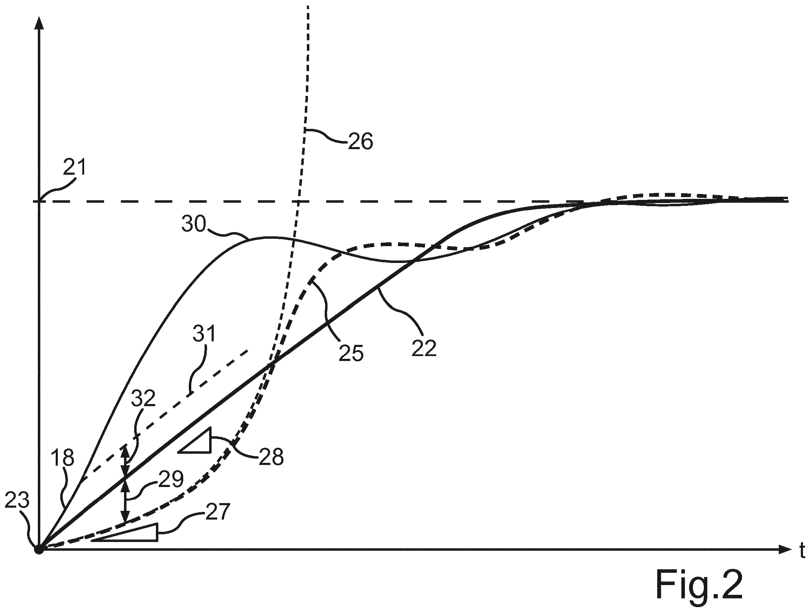

Die Steuervorrichtung 12 kann beispielsweise ein Steuergerät des Kraftfahrzeugs 10 sein. Die Steuervorrichtung 12 kann eine Prozessoreinrichtung 17 aufweisen, durch welche ein Verfahren ausgeführt werden kann. Die Steuervorrichtung 12 kann zum Umsetzen oder Ansteuern der Bremsanlage 14 einen Regler PI aufweisen, der für eine Bremsbetriebsgröße der Bremsanlage 14 einen Anforderungswert 18 vorgeben kann, der dann mittels einer Bremsdruckpumpe 19 der Bremsanlage 14 eingestellt werden soll. Die Bremsbetriebsgröße kann ein Bremsmoment oder eine Bremskraft oder ein Bremsdruck oder kurz Druck p sein. In Fig. 2 nicht dargestellt, dass die Steuervorrichtung auch zusätzlich eine Vorsteuerung aufweisen kann, die z.B. auf der Grundlage der Gleichung F=m*a sofort und ohne Regeldifferenz einen Sollwert generieren kann, der als Basis oder Aufsetzpunkt für den PI-Regler dienen kann.

Die Bremsanlage 14 kann einen weiteren, eigenen Regler 20 aufweisen, der den Anforderungswert 18 als Sollwert empfängt und durch Betreiben der Bremsdruckpumpe 19 einregelt. Die Bremsanlage 14 kann z.B. eine ESC (Electronic Stability Control) aufweisen. Die Bremsdruckpumpe 19 kann eine Hydraulikpumpe sein.

Zum Beschleunigen des Kraftfahrzeugs bei einer entsprechenden Bremsanforderung das Fahrerassistenzsystems 11 kann Steuervorrichtung 12 auch den Fahrantrieb 13 ansteuern, was aber zu der Erfindung nicht beiträgt und deshalb hier nicht weiter beschrieben ist.

Fig. 2 veranschaulicht, wie durch die Steuervorrichtung 12 in Abhängigkeit von der Bremsanforderung 16 ein Zielwert 21 für die Bremsbetriebsgröße eingestellt wird. Um den Zielwert 21 nicht ruckartig oder sprunghaft anzusteuern, wird ein Idealverlauf 22 für die Bremsbetriebsgröße vorgegeben oder ermittelt, der von einem Anfangswert 23, beispielsweise 0, zum Zielwert 21 führt und hierbei sicherstellt, dass die Beschleunigung des Kraftfahrzeugs 10 sich mit einer vorgegebenen Ruck ändert, d.h. es wird durch den Idealverlauf 22 ein vorgegebenes Ruckkriterium 24 erfüllt.

Die Steuervorrichtung 12 kann nun den Anforderungswert 18 vorgeben, und die Bremsanlage 14 kann durch ihren eigenen Regler 20 mittels der Bremsdruckpumpe 19 einen Istwert 25 der Bremsbetriebsgröße nachführen oder einregeln. Die Bremsdruckpumpe 19 fördert hierzu ein Volumen V einer Bremsflüssigkeit in bekannter Weise in einen Bremszylinder, wodurch sich ein verfügbares Bremsmoment 26 ergibt. Zu Beginn, bei druckfreiem Bremszylinder, kann ein Gradient 27 des Verlaufs der Bremsbetriebsgröße, d.h. des Istwerts 25, kleiner sein als ein zeitlich korrespondierender Gradient 28 des Idealverlaufs 22. Entsprechend ergibt sich ein Regelfehler 29 zwischen Idealverlauf 22 und Istwert 25. In Abhängigkeit von diesem Regelfehler 29 wird durch den Regler PI der Anforderungswert 18 nachgeführt und es kommt zu einem Anforderungswert 18, der größer als der Idealverlauf 22 ist.

So würde ein WindUp 30 entstehen, falls der Regler 24 den Regelfehler 29 beliebig groß werden lassen würde. Der WindUp 30 kann in einer Regelbetriebsgröße, beispielsweise in einem I-Anteil 31 des Reglers PI, entstehen oder gespeichert sein.

Um ein zu großes WindUp 30 zu verhindern, kann im Regler PI für die Regelbetriebsgröße, also beispielsweise einen I-Anteil 31 des Reglers PI, ein Maximalwert 32 vorgegeben werden, falls erkannt wird, dass ein Einfrierkriterium 33 erfüllt ist. Das Einfrierkriterium kann z.B. besagen, dass der aktuelle Gradient 27 kleiner als der Gradient 28 ist.

Bei der Regelaufgabe wird somit ein Anti-WindUp implementiert, welches den Regler PI begrenzt, wenn die Stellgröße absolut größere Werte annimmt, als die Strecke oder besser gesagt das Stellglied umsetzen kann (Begrenzung der Reglers auf die maximale Stellgröße).

Fungiert für eine durch den kinematischen Regler 15 kommandierte Verzögerung die Hydraulikpumpe oder Bremsdruckpumpe 19 des ESC als Stellglied, so ist jedoch tatsächlich der Regler 20 als ein weiteres Regel- oder auch Steuerungselement zwischengeschaltet, welches seinerseits die vom dynamischen Regler PI angeforderte Verzögerung durch einen Druckaufbau des Bremsdruck p herstellen muss. Um den Druck p aufzubauen, wird eine mechanische Pumpe betrieben, die letztendlich nicht einen Druck, sondern einen Volumenstrom V zur Verfügung stellt, der dann zu einem Druckanstieg im Bremssystem 14 führt. Dieser Volumenstrom V ist in erster Näherung proportional zur Drehzahl der Hydraulikpumpe und begrenzt durch deren aus technischen und akustischen Gründen zulässige Drehzahl.

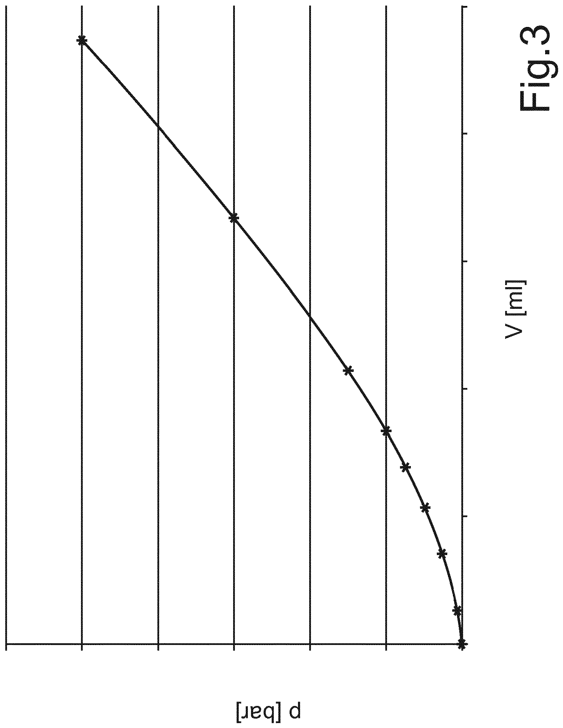

In Fig. 3 ist dargestellt, wie der Druckanstieg im hydraulischen System der Bremsanlage wiederum bekanntermaßen nicht linear, sondern der jeweiligen p-V-Kennlinie des Bremssystems (p - Bremsdruck, V - Volumen der geförderten Bremsflüssigkeit) folgt.

Durch diesen physikalischen Zusammenhang kann es bei dynamisch ausgelegtem Regler PI dazu kommen, dass besonders im Bereich niedrigen Druckes p ein WindUp 30 in Richtung zu großer Stellgröße des dynamischen Reglers PI in Form des Anforderungswerts 18 nicht durch Begrenzung des absolut maximalen Druckes p hervorgerufen wird, sondern dynamisch - eben durch den zur Verfügung stehenden maximalen Druckgradienten 27 im jeweiligen Betriebspunkt oder Betriebsbereich des Bremssystems.

In der Praxis heißt das, dass der dynamische Regler PI immer dann, wenn das anfordernde Assistenzsystem 11 mit hohem Gradienten 28 eine Verzögerung einstellen möchte, versucht, eine scheinbare Regelabweichung 29 (zu schwache Verzögerung) auszuregeln, die jedoch tatsächlich dadurch erzeugt wird, dass die zur Verfügung stehende Hydraulikpumpe 19 in ihrem aktuellen Betriebspunkt (gegeben durch Druck p / im System eingeschlossenes Volumen V, zulässige Drehzahl) den angeforderten Druck p nicht in der erwarteten Zeit durch Volumenverschiebung erzeugen konnte. Durch ihr integrierendes Verhalten wird die Strecke aber tatsächlich in endlicher Zeit den Solldruck erreicht haben, ohne dass der Regler PI an der Stellgröße (Anforderungswert 18) etwas ändern müsste. Die vom dynamischen Regler PI zu hoch angeforderte Stellgröße (zu großer Anforderungswert 18) wiederum muss vom Regler PI erst durch Regelabweichung erkannt und wieder abgebaut werden. Während des Abbaus der Stellgröße durch den Regler PI kann die tatsächliche Verzögerung weiter zunehmen, da der unterlagerte Druckregler im Bremssystem zwar weniger aber immer noch positive Regelabweichung sieht. Erschwerend kommt hinzu, dass mit steigendem Systemdruck auch der erreichbare und somit der vom Druckregler auch gestellte Druckgradient 27 weiter steigt. Aufgrund der oben genannten Proportionalität zwischen Bremsdruck und Bremsmoment und somit auch Verzögerung folgt ein schneller Verzögerungsabbau. In Summe eine sehr unkomfortable Fahrsituation.

Es handelt sich hier zusammengefasst um einen Zielkonflikt bei der Reglerauslegung.

- Einerseits soll der dynamische Regler PI Regelabweichungen 29 schnellstmöglich ausregeln.
- Andererseits soll der dynamische Regler PI keine höhere Dynamik (Gradient 28) fordern, als sein Steller (Bremsdruckpumpe 19) liefern kann (Gradient 27).
- Zusätzlich ist die Dynamik (oder auch Zeitkonstante) des Stellers stark variabel und verläuft nichtlinear mit der Zeit (siehe Fig. 3).

Dieser Zielkonflikt wird vorteilhaft so gelöst, dass der dynamische Regler PI gleichzeitig zu jeder Zeit die aktuell verfügbare Stellerperformance nutzen kann (höchstens erreichbarer Gradient 27) und trotzdem gleichzeitig Schwingeffekte und WindUp vermieden werden.

Der Regler PI unterscheidet hierzu zwischen Störungen, die er ausregeln kann, und Performance-Einschränkungen des Stellers im aktuellen Betriebspunkt, die er nicht ausregeln soll.

Die Steuervorrichtung 12 stellt hierzu den folgenden Lösungsansatz bereit.

Zur Erinnerung sei angemerkt, dass um das beschrieben Verhalten im dynamischen Regler PI zu beherrschen, es im einen Extremfall die Möglichkeit gibt, den Regler hinsichtlich seiner Zeitkonstanten so auszulegen, dass er die bei leerer Hydraulik der Bremsanlage 14 erreichbaren Bremsmomentengradienten 27 nie überschreitet. Je nach Auslegung der Bremse bedeutet dies aber entweder einen deutlichen Performanceverlust oder akustische Nachteile, weil (anderer Extremfall) die zulässige Pumpendrehzahl so weit erhöht werden muss, dass die systemseitig höchsten geforderten Bremsmomentengradienten 28 auch bei leerem System angeboten werden können.

Eine adaptiver Ansatz wird deshalb bereitgestellt: Davon ausgehend, dass

a. der Druck-Volumen-Zusammenhang (Fig. 3) des verwendeten Bremssystems 14 messtechnisch zumindest in Messpunkten über den relevanten Druckbereich verteilt erfasst und somit bekannt ist sowie

b. Das Bremskraft (oder Bremsmoment) zu Druck Verhältnis als Auslegungskriterium der Bremsanlage 14 unter ideal angenommenen Bedingungen ebenfalls konstant ist und

c. unter Annahme einer konstanten maximal zulässigen Pumpendrehzahl und damit eines bekannten maximalen Volumenstromes $\dot{V}$ ("V Punkt")

kann der verfügbare Bremsmomentengradient 27 über den Umweg des aktuellen Bremsdruckes p für die Zwecke des dynamischen Längsreglers PI in einfacher Weise als Polynomfunktion angenähert werden. Zur Ermittlung des Polynoms bietet sich die Methode der kleinsten Fehlerquadrate an, mit deren Hilfe und unter Verwendung der Messpunkte aus a) sich die Koeffizienten so ermitteln lassen, dass nachher eine Rechenvorschrift für $p(V)$ existiert. Durch Ableitung ergibt sich $\frac{dp}{dV}$ und unter Zuhilfenahme des bekannten maximalen Volumenstroms aus c), also $\dot{V} = \frac{dV}{dt}$ kann dann $\frac{dp}{dt}$ und somit $\dot{p}(V)$ ermittelt werden.

Mit der Annahme b) kann davon ausgegangen werden, dass das erzeugte Bremsmoment dem Druck mit dem bekannten Verhältnis proportional ist, dass sich also das Bremsmoment durch Multiplikation eines zeitkonstanten Faktors mit dem Bremsdruck ergibt. Dieser Faktor bleibt auch bei der Ableitung erhalten, sodass nun eine Rechenvorschrift für den verfügbaren Bremsmomentengradienten 27 existiert; es gilt:

$$\dot{M}_{BR} = c \cdot \dot{p}(V)$$

Dieser Bremsmomentengradient 27 kann nun verwendet werden, um die Reglerdynamik des dynamischen Reglers PI zu beeinflussen.

Alternativ kann die Modellberechnung für den verfügbaren Bremsmomentengradienten nicht in der Software, sondern offline durchgeführt werden und dann als Kennlinie in die Software eingetragen werden.

1. Je nach gewünschtem Verhalten und Aufbau des dynamischen Reglers PI, kann dieser Gradient mit einem möglicherweise zur Vorsteuerung des dynamischen Reglers sowieso vorhandenen Fahrzeugmodells zu einem verfügbaren Verzögerungsgradienten umgerechnet werden, um damit den Gradienten der Anforderung schon am Reglereingang auf erreichbare Werte zu begrenzen. Dies ist besonders vorteilhaft bei vorgesteuerten Reglern und/oder wenn die Priorität des anfordernden Assistenzsystems / kinematischen Reglers darauf liegt, den Gradienten der Anforderung niemals (betragsmäßig) zu überschreiten.

2. Eine weitere vorteilhafte Implementierung sieht vor, den berechneten, maximal verfügbaren Bremsmomentengradienten mit dem Gradienten der Anforderung zu vergleichen und immer dann, wenn die Anforderung einen Gradienten nahe oder oberhalb des berechneten maximalen Gradienten aufweist, den Integralregler einzufrieren oder in seiner Dynamik zu reduzieren. Diese Implementierung ist vorteilhaft, wenn es keine Vorsteuerung des dynamischen Reglers gibt und somit auch eine modellbasierte Rückrechnung in einen Beschleunigungsgradienten nicht möglich ist oder aber wenn die Priorität des anfordernden Assistenzsystems / kinematischen Reglers darauf liegt, dem Anforderungswert auf der Ebene Beschleunigung oder Moment mit maximaler Dynamik zu folgen und eine Überschreitung des angeforderten Gradienten zulässig ist. Ein weiterer Vorteil dieser Implementierung ergibt sich in einem vorgesteuerten System, wenn der Steller, also das ESC bzw. dessen Druckregelung/Steuerung seine Regelperformance bzw. den Akustik/Performance Trade-Off anhand der Eingangsdynamik zur Laufzeit anpasst. Dann ist es möglicherweise erwünscht den gesteuerten Anteil der Stellgröße unbegrenzt auf den Steller zu beaufschlagen und nur den Regleranteil entsprechend zu begrenzen.

3. In beiden Vorgestellten Varianten 1 und 2 ist es zusätzlich sinnvoll den durch die Modellrechnung sowieso verfügbaren Istdruck [mit b) in ein Bremsmoment umrechenbar] mit dem geforderten Bremsmoment zu vergleichen und bei Überschreitung um einen vorgegebenen Betrag, d.h. den Maximalwert 32 (der auch "0" sein kann), ebenfalls den Reglerparameter des Integralreglers zu reduzieren (ggf. bis auf "0"), d.h. den sogenannten I-Faktor oder Integralfaktor, der zu unterscheiden ist von dem Wert des Integralreglers (I-Anteil) selbst, der wie oben beschrieben vorzugsweise verschieden von "0" bleibt/wird. Somit wird der I-Anteil nicht noch größer.

4. Je nach Anforderungsprofil und Druckregelkonzept des Stellers kann es sinnvoll sein, die Begrenzung des Reglereingangsgradienten nach Variante 1 erst durchzuführen, wenn der ermittelte Brems-Modelldruck aus 3 um einen festgelegten Betrag unterhalb der Anforderung liegt.

5. Durch geschickte Implementierung ist es möglich, auch den proportionalen Anteil des dynamischen Reglers zu reduzieren, wenn Gradient oder Betrag der Anforderung die Modellwerte überschreiten.

Im Folgenden ist eine mathematische Herleitung mit Hilfe eines Polynoms 2ten Grades oder zweiter Ordnung und eine Begründung/Diskussion der getroffenen Vereinfachungen dargestellt.

Die Steuervorrichtung sieht ein Ausblenden mittels des Regler-Integralfaktors (siehe den obigen Punkt 3) immer dann vor, wenn der aus der Bremsanforderung resultierende Bremsdruck in der Bremse nicht eingestellt ist oder der aktuell geforderte Gradient von der Bremse nicht geliefert werden kann. Somit kann ein dynamisches Regler-WindUp im Bremsenbereich reduziert werden.

Warum ist das erforderlich? Die konventionelle Bremse, die das Bremsmoment (Bremsmoment in erster Näherung proportional zu Druck) einstellt, ist eigentlich kein Drucksteller, sondern ein Volumenstromsteller. Die Wirkgröße ist das von der Pumpe in die Bremse geförderte Bremsfluid, welches dann den Druck verursacht, der letztendlich die Flächen der Bremsbeläge und Scheibe aufeinander presst und durch Reibung bremst.

Jedes Bremssystem hat eine Kennlinie, die Druck und Volumen im System miteinander in Beziehung setzt. Diese Kennlinie kann für eine Bremse vermessen werden. Zusätzlich können über die Bremsenentwicklung ebenfalls die für Bremsanforderungen zulässige Pumpendrehzahl und die Pumpengeometrie oder direkt das Fördervolumen pro Hub bezogen werden.

Aus der Literatur oder ebenfalls von der Bremsenentwicklung kann ebenfalls der Koeffizient bezogen werden, mit dem ein Sollbremsmoment in der Bremse in einen Druck umgerechnet wird.

Wie die Fig. 3 zeigt, weist der Bremsdruck über dem Volumen aufgetragen einen in erster Näherung parabelförmigen Verlauf auf.

Zur Vereinfachung und um einen kontinuierlichen formelmäßigen Zusammenhang zu erzeugen (den man nachher auch mathematisch ableiten kann, denn wir interessieren uns ja in erster Linie für den erreichbaren Druckgradienten), wird eine quadratische Gleichung

$$p(v) = av^2 + bv + c$$

unterstellt. Mit der Methode der kleinsten Quadrate werden dann die Koeffizienten der Gleichung ermittelt. Der quadratische (a) und lineare (b) Koeffizient kann bestimmt werden. Der Achsenabschnitt (c) wird dabei fest mit "0" angenommen, was angesichts der Größenordnungen in Druck in denen wir uns im regelmäßigen Betrieb befinden eine zulässige Vereinfachung ist.

Es folgt die Herleitung von den verwendeten Formeln. Gesucht ist der verfügbare Momentengradient der Bremse in Abhängigkeit des bereits gestellten Bremsmomentes $\frac{dM_B}{dt}(M_B)$. Führt man das geforderte Bremsmoment mit dem hier zu berechnenden Gradienten nach, so kann leicht auch das aktuelle Bremsmoment laut Modell mitgerechnet werden.

Gegeben:

- Druck-Volumen Kennlinie (p-V-Kennlinie) der Bremse, somit Koeffizienten a,b der zugrunde gelegten quadratischen Gleichung
- Zusammenhang Druck-Moment der Bremse: $C_{Bremse}$
- Geometrie der Pumpe; Volumen pro Hub: $c_{Pumpe}$
- Zulässige Pumpendrehzahl: $n_{Pumpe}$

Es ist:

$$p(v) = av^2 + bv$$

Somit:

$$v(p) = \pm\frac{1}{2a}(\sqrt{4ap + b^2} - b)$$

Und:

$$\frac{dp}{dv} = 2a \cdot v + b$$

... positives v(p) einsetzen...

$$\frac{dp}{dv}(p) = \sqrt{4a \cdot p + b^2}$$

Die Pumpenparameter lassen sich zum verfügbaren Volumenstrom der Pumpe verrechnen; es gilt:

$$\dot{V} = \frac{dV}{dt} \approx n_{Pumpe} \cdot c_{Pumpe} - p_{ist} \cdot c_{Leckage}$$

... Wir setzen vereinfachend die Leckage zu "0"...

$$\frac{dV}{dt} = n_{Pumpe} \cdot c_{Pumpe} = c_{v,Pumpe}$$

Es gilt:

$$\frac{dp}{dt} = \frac{dp}{dV} \cdot \frac{dV}{dt}$$

Eingesetzt:

$$\frac{dp}{dt} = \sqrt{4a \cdot p + b^2} \cdot c_{v,Pumpe}$$

...und mit gegebenem Druck-Momenten Zusammenhang $c_{Bremse}$

$$\frac{dM_B}{dt} = c_{Bremse} \cdot \frac{dp}{dt} = \sqrt{4a \cdot p + b^2} \cdot c_{v,Pumpe} \cdot c_{Bremse}$$

Die getroffenen Vereinfachungen sind:

1) der Leerweg der Bremse (Abstand zwischen Bremsbelag und Scheibe) wird nicht berücksichtigt

==> Effekte dadurch werden als Störgröße vom Regler abgefangen

2) Verschleißeffekte der Bremse bleiben unberücksichtigt ==> das Modell berücksichtigt nur eine ideale Bremse. Bei verschlissener Bremse können Abweichungen vom Regler abgefangen werden.

3) Leckverluste der Pumpe bleiben unberücksichtigt, sofern deren linearer Anteil nicht im spezifizierten Fördervolumen pro Hub enthalten ist

4) Temperatur/Nässe/Temperatureinflüsse auf den Reibkoeffizienten der Bremse werden vernachlässigt

5) Der Druckregler in der Bremsanlage arbeitet optimal, nutzt die maximale Pumpendrehzahl also aus, wenn es eine bestimmte Regeldifferenz gibt (die parametrierbar berücksichtigt werden kann, siehe den einstellbaren Maximalwert 32)

6) Die Anlaufgeschwindigkeit der Pumpe ist zu vernachlässigen (tatsächlich im Bereich kleiner als 100 ms)

7) Fahrdynamik- und Schlupfregelung bleiben unberücksichtigt. Das Modell geht in diesem Fall tendenziell von einem zu hohen Druck aus und der WindUp wird, analog heute, nicht behandelt. Allerdings kann in diesen Situationen ein vorteilhaft integrierter Regler über die Bedingung des Schlupfregeleingriffes eingefroren werden.

Diese Vereinfachungen können allesamt deshalb getroffen werden, weil ihre Berücksichtigung im Vergleich mit Ihrer Nichtberücksichtigung zu einem niedrigeren möglichen Gradienten führen würden.

Für den Fall der Fahrdynamikregelung ist alternativ eine Deckelung des verfügbaren Gradienten auf "0" denkbar.

Benutzt man diese Information also zur Berechnung eines Einfrierkriteriums für den Regler, so würde das Einfrieren im Vergleich mit einem Konzept ohne diese Vereinfachungen verspätet stattfinden und somit einen gewissen WindUp zulassen. Dies ist unkritisch aus folgenden Gründen:

1) Der verfügbare Bremsdruckgradient steigt nichtlinear mit dem geförderten Volumen. Ein nicht erreichbarer Druckgradient ist im Verlauf des weiteren Druckaufbaus immer irgendwann erreichbar.

2) Für den Fall das kein weiterer Druckaufbau stattfinden soll (Bremsanforderung konstant), wird der im ESC enthaltene Druckregler dennoch weiterregeln, bis der angeforderte Bremsdruck erreicht ist.

3) Für den Fall dass der Druckregler des ESC bedingt durch ein dem Verschleißzustand der Hardware nicht ausreichend Rechnung tragenden Druckmodell einen durch nicht erreichte Gradienten statischen Druckfehler nicht ausregeln kann, wird der übergeordnete kinematische Beschleunigungsregler diesen Fehler als zusätzlichen Regelfehler in der Verzögerung ausregeln.

Die Verwendung von Parametern einer verschlissenen Bremsanlage führt dann nicht zu einem Fehlverhalten der Reglerkette, lediglich zu einem konservativerem, früheren Einfrieren des Integralreglers in dynamischen Situationen mit der einzigen Konsequenz einer möglicherweise größeren statischen bzw. quasistatischen Regelabweichung in dieser dynamischen Situation (Vorsteuerung und P-Anteil sind nach wie vor aktiv).

Insgesamt zeigt das Beispiel, wie durch die Erfindung in einem Kraftfahrzeug bei einem fahrdynamischen Regler ein modellbasiertes Verfahren zur dynamischen Reglerbegrenzung gegen einen WindUp bereitgestellt werden kann.

**Bezugszeichenliste**

10    Kraftfahrzeug
11    Fahrerassistenzsystem
12    Steuervorrichtung
13    Fahrantrieb
14    Bremsanlage
15    Kinematischer Reglern
16    Bremsanforderung
17    Prozessoreinrichtung
18    Anforderungswert
19    Bremsdruckpumpe
20    Regler
21    Zielwert
22    Idealverlauf
23    Anfangswert
24    Ruckkriterium
25    Istwert

26    Verfügbares Bremsmoment
27    Gradient der Bremsbetriebsgröße
28    Gradient des Idealverlaufs
29    Regelfehler
30    WindUp
31    I-Anteil
32    Maximalwert
33    Einfrierkriterium

p    Bremsdruck
PI    Regler
V    Volumen

**Patentansprüche**

**1.** Verfahren zum Betreiben einer Steuervorrichtung (12) für eine Bremsanlage (14) eines Kraftfahrzeugs (10), wobei die Steuervorrichtung (12)

- aus einem Fahrerassistenzsystem (11) eine Bremsanforderung (16) empfängt und
- zu der Bremsanforderung (16) einen Zielwert (21) einer Bremsbetriebsgröße der Bremsanlage (14) ermittelt und
- zu der Bremsbetriebsgröße einen zeitlichen Idealverlauf (22) ermittelt, der graduell unter Einhaltung eines vorbestimmten Ruckkriteriums (24) zu dem Zielwert (21) führt, und
- einen Regelfehler (29) eines Istwerts (25) der Bremsbetriebsgröße bezüglich des Idealverlaufs (22) ermittelt und aus dem Regelfehler (29) auf der Grundlage einer Reglereinheit (PI) einen Anforderungswert (18) für einen Regler (20) einer Bremsdruckpumpe (19) der Bremsanlage (14) ermittelt und
- den Anforderungswert (18) bei dem Regler (20) einstellt,

**dadurch gekennzeichnet, dass**

die Steuervorrichtung (12) einen mittels der Bremsdruckpumpe (19) höchstens erreichbaren zeitlichen Gradienten (27) der Bremsbetriebsgröße ermittelt und überprüft, ob der Gradient (27) ein vorbestimmtes Einfrierkriterium (33) erfüllt, und bei erfülltem Einfrierkriterium zumindest eine Regelbetriebsgröße (31) der Reglereinheit (PI) und/oder einen Gradienten der Bremsanforderung (16) auf einen jeweils vorgegebenen Maximalwert (32) begrenzt und damit die Steuervorrichtung (12) ihre Reglereinheit (PI) in Abhängigkeit von dem aktuellen Vermögen der Bremsdruckpumpe (19) in Bezug auf den maximal erreichbaren zeitlichen Gradienten (27) der Bremsbetriebsgröße im aktuellen Betriebspunkt einstellt.

**2.** Verfahren nach Anspruch 1, wobei die Reglereinheit (PI) einen Regler mit I-Anteil aufweist und als Regelbetriebsgröße (31) der I-Anteil begrenzt wird.

**3.** Verfahren nach einem der vorhergehenden Ansprüche, wobei bei unerfülltem Einfrierkriterium die zumindest eine Regelbetriebsgröße (31) als Funktion des Regelfehlers (29) auch größer als der jeweilige Maximalwert (32) werden lässt.

**4.** Verfahren nach einem der vorhergehenden Ansprüche, wobei das Einfrierkriterium (33) umfasst, dass der erreichbare zeitliche Gradient (27) kleiner als ein Gradient (28) des Idealverlaufs (22) ist.

**5.** Verfahren nach einem der vorhergehenden Ansprüche, wobei, nachdem erkannt wird, dass das Einfrierkriterium (33) erfüllt ist, die zumindest eine Regelbetriebsgröße (31) erst nach einer vorbestimmten Wartezeit begrenzt wird.

**6.** Verfahren nach einem der vorhergehenden Ansprüche, wobei die Bremsbetriebsgröße ein Bremsmoment oder ein Bremsdruck (p) oder eine Bremskraft ist.

**7.** Verfahren nach einem der vorhergehenden Ansprüche, wobei eine ab dem Empfangen der Bremsanforderung (16) vergangene Zeitdauer ermittelt wird und ein zum jeweiligen aktuellen Zeitpunkt aktueller Wert des höchstens erreichbaren zeitlichen Gradienten (27) in Abhängigkeit von einen Wert der Zeitdauer und auf der Grundlage eines Modells der Bremsanlage (14) ermittelt wird.

8. Verfahren nach Anspruch 7, wobei das Modell einen Funktionszusammenhang von gefördertem Bremsflüssigkeitsvolumen (V) und hierdurch bewirktem Bremsdruck (p) auf der Grundlage eines Polynoms zweiter Ordnung annähert.

9. Verfahren nach einem der vorhergehenden Ansprüche, wobei das Ruckkriterium (24) umfasst, dass beim Einstellen der Bremsanforderung (16) ein in dem Kraftfahrzeug (10) bewirkter Ruck kleiner als ein vorbestimmter Höchstwert ist.

10. Verfahren nach einem der vorhergehenden Ansprüche, wobei das Ruckkriterium (24) umfasst, dass der Ruck konstant ist.

11. Verfahren nach einem der vorhergehenden Ansprüche, wobei die Bremsanforderung (16) aus einem Abstandsregelautomat und/oder einer Parkassistenz und/oder einer bremsenden Geschwindigkeitsregelanlage und/oder einem bremsenden Geschwindigkeitsbegrenzer empfangen wird.

12. Steuervorrichtung (12) für eine Bremsanlage (11) eines Kraftfahrzeugs (10), wobei die Steuervorrichtung (12) eine Prozessoreinrichtung (17) aufweist,
   **dadurch gekennzeichnet, dass** die Prozessoreinrichtung (17) dazu eingerichtet ist, ein Verfahren nach einem der vorhergehenden Ansprüche durchzuführen.

13. Kraftfahrzeug (10) mit einem Fahrerassistenzsystem (11) und einer Bremsanlage (14),
   **dadurch gekennzeichnet, dass**
   das Fahrerassistenzsystem (11) und die Bremsanlage (14) über eine Steuervorrichtung (12) nach Anspruch 12 gekoppelt sind.

**Claims**

1. Method for operating a control device (12) for a brake system (14) of a motor vehicle (10), wherein the control device (12)

   - receives a braking demand (16) from a driver assistance system (11) and
   - ascertains, in relation to the braking demand (16), a target value (21) of a brake operation variable of the brake system (14) and
   - ascertains, in relation to the brake operation variable, an ideal profile with respect to time (22) which gradually leads to the target value (21) while adhering to a predetermined jerk criterion (24), and
   - ascertains a closed-loop control error (29) of an actual value (25) of the brake operation variable in relation to the ideal profile (22) and, from the closed-loop control error (29), on the basis of a closed-loop controller unit (PI), ascertains a demand value (18) for a closed-loop controller (20) of a brake pressure pump (19) of the brake system (14), and
   - sets the demand value (18) at the closed-loop controller (20),

   **characterized in that** the control device (12) ascertains a maximum gradient with respect to time (27) of the brake operation variable that can be attained by means of the brake pressure pump (19) and checks whether the gradient (27) satisfies a predetermined freeze criterion (33) and, if the freeze criterion is satisfied, limits at least one closed-loop control operating variable (31) of the closed-loop controller unit (PI) and/or a gradient of the braking demand (16) to a respectively predefined maximum value (32), and thus the control device (12) sets its closed-loop controller unit (PI), in a manner dependent on the present capacity of the brake pressure pump (19), with regard to the maximum attainable gradient with respect to time (27) of the brake operation variable at the present operating point.

2. Method according to Claim 1, wherein the closed-loop controller unit (PI) has a closed-loop controller with an I component and, as closed-loop control operating variable (31), the I component is limited.

3. Method according to either of the preceding claims, wherein, in the event of the freeze criterion not being satisfied, the at least one closed-loop control operating variable (31) may, as a function of the closed-loop control error (29), also become greater than the respective maximum value (32).

4. Method according to any of the preceding claims, wherein the freeze criterion (33) comprises that the attainable gradient with respect to time (27) is shallower than a gradient (28) of the ideal profile (22).

5. Method according to any of the preceding claims, wherein, after it has been identified that the freeze criterion (33) has been satisfied, the at least one closed-loop control operating variable (31) is limited only after a predetermined waiting time.

6. Method according to any of the preceding claims, wherein the brake operation variable is a braking torque or a brake pressure (p) or a braking force.

7. Method according to any of the preceding claims, wherein a time duration that has elapsed starting from the receipt of the braking demand (16) is ascertained, and a present value of the maximum attainable gradient with respect to time (27) at the respective present point in time is ascertained in a manner dependent on a value of the time duration and on the basis of a model of the brake system (14).

8. Method according to Claim 7, wherein the model approximates a functional relationship of conveyed brake liquid volume (V) and resulting brake pressure (p) on the basis of a second-order polynomial.

9. Method according to any of the preceding claims, wherein the jerk criterion (24) comprises that a jerk which is caused in the motor vehicle (10) upon the setting of the braking demand (16) is less than a predetermined maximum value.

10. Method according to any of the preceding claims, wherein the jerk criterion (24) comprises that the jerk is constant.

11. Method according to any of the preceding claims, wherein the brake demand (16) is received from an adaptive cruise control system and/or a parking assistance system and/or a speed control system with braking action and/or a speed limiter with braking action.

12. Control device (12) for a brake system (11) of a motor vehicle (10), wherein the control device (12) has a processor device (17), **characterized in that** the processor device (17) is configured to carry out a method according to any of the preceding claims.

13. Motor vehicle (10) having a driver assistance system (11) and having a brake system (14), **characterized in that** the driver assistance system (11) and the brake system (14) are coupled by means of a control device (12) according to Claim 12.

**Revendications**

1. Procédé de fonctionnement d'un dispositif de commande (12) d'un système de freinage (14) d'un véhicule automobile (10), le dispositif de commande (12)

   - recevant une demande de freinage (16) d'un système d'assistance à la conduite (11) et
   - déterminant pour la demande de freinage (16) une valeur cible (21) d'une grandeur de fonctionnement de freinage du système de freinage (14) et
   - déterminant pour la grandeur de fonctionnement de freinage une variation dans le temps idéale (22) qui conduit progressivement à la valeur cible (21) tout en respectant un critère de secousse prédéterminé (24), et
   - déterminant une erreur de régulation (29) d'une valeur réelle (25) de la grandeur de fonctionnement de freinage par rapport à la variation idéale (22) et déterminant à partir de l'erreur de régulation (29), sur la base d'une unité de régulation (PI), une valeur de demande (18) d'un régulateur (20) d'une pompe de pression de freinage (19) du système de freinage (14) et
   - définissant la valeur de demande (18) au niveau du régulateur (20),

   **caractérisé en ce que**
   le dispositif de commande (12) détermine un gradient temporel maximal (27) de la grandeur de fonctionnement de freinage qui peut être obtenu au moyen de la pompe de pression de freinage (19) et vérifie si le gradient (27) satisfait à un critère de gel (33) spécifié et, si le critère de gel est satisfait, limite au moins une grandeur de fonctionnement de régulation (31) de l'unité de régulation (PI) et/ou un gradient de la demande de freinage (16) à une valeur maximale (32) spécifiée à chaque fois et donc le dispositif de commande (12) limite son unité de régulation (PI) en fonction de la capacité actuelle de la pompe de pression de freinage (19) quant aux gradients temporels maximaux (27) de la grandeur de freinage, qui peuvent être atteints, au point de fonctionnement actuel.

**2.** Procédé selon la revendication 1, l'unité de régulation (PI) comportant un régulateur ayant une composante I et la composante I étant limitée en tant que grandeur de fonctionnement de régulation (31).

**3.** Procédé selon l'une des revendications précédentes, si le critère de gel n'est pas satisfait, l'au moins une grandeur de fonctionnement de régulation (31) pouvant également être supérieure à la valeur maximale (32) respective en fonction de l'erreur de régulation (29).

**4.** Procédé selon l'une des revendications précédentes, le critère de gel (33) comprenant le fait que le gradient temporel (27) pouvant être atteint est inférieur à un gradient (28) de la variation idéale (22) .

**5.** Procédé selon l'une des revendications précédentes, après détection du fait que le critère de gel (33) est satisfait, l'au moins une variable de fonctionnement de régulation (31) n'étant limitée qu'après un temps d'attente prédéterminé.

**6.** Procédé selon l'une des revendications précédentes, la variable de fonctionnement de freinage étant un couple de freinage ou une pression de freinage (p) ou une force de freinage.

**7.** Procédé selon l'une des revendications précédentes, une durée qui s'est écoulée depuis la réception de la demande de freinage (16) étant déterminée et une valeur actuelle, à l'instant actuel respectif, du gradient temporel maximum (27) pouvant être atteint étant déterminée en fonction d'une valeur de la durée et sur la base d'un modèle du système de freinage (14).

**8.** Procédé selon la revendication 7, le modèle se rapprochant d'une relation fonctionnelle entre le volume de liquide de frein acheminé (V) et la pression de freinage (p) provoquée par celui-ci sur la base d'un polynôme du deuxième ordre.

**9.** Procédé selon l'une des revendications précédentes, le critère de secousse (24) comprenant le fait que, lorsque la demande de freinage (16) est établie, une secousse provoquée dans le véhicule automobile (10) est inférieure à une valeur maximale prédéterminée.

**10.** Procédé selon l'une des revendications précédentes, le critère de secousse (24) comprenant le fait que la secousse est constante.

**11.** Procédé selon l'une des revendications précédentes, la demande de freinage (16) étant reçue d'une commande automatique de régulation de distance et/ou d'une aide au stationnement et/ou d'un système de régulation de vitesse de freinage et/ou d'un limiteur de vitesse de freinage.

**12.** Dispositif de commande (12) d'un système de freinage (11) d'un véhicule automobile (10), le dispositif de commande (12) comportant un moyen de traitement (17),
**caractérisé en ce que** le moyen de traitement (17) est conçu pour mettre en œuvre un procédé selon l'une des revendications précédentes.

**13.** Véhicule automobile (10) comprenant un système d'assistance à la conduite (11) et un système de freinage (14),
**caractérisé en ce que**
le système d'assistance à la conduite (11) et le système de freinage (14) sont accouplés par le biais d'un dispositif de commande (12) selon la revendication 12.

Fig.1

Fig.2

EP 3 600 983 B1

Fig.3

V [ml]

p [bar]

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19616732 A1
- DE 19616732
- DE 102009030165 A1
- DE 102005005375 A1
- DE 102009008941 A1